**Europäisches Patentamt**

**European Patent Office**

**Office européen des brevets**

(19)

(11) Veröffentlichungsnummer: **0 067 312**
**B1**

(12) # EUROPÄISCHE PATENTSCHRIFT

(45) Veröffentlichungstag der Patentschrift:
**12.08.87**

(51) Int. Cl.⁴: **C 25 D 13/06,** C 08 F 283/00

(21) Anmeldenummer: **82104166.2**

(22) Anmeldetag: **13.05.82**

(54) **Verfahren zur Herstellung von Bindemitteln für kathodisch abscheidbare Überzugsmassen.**

(30) Priorität: **13.06.81 DE 3123536**

(43) Veröffentlichungstag der Anmeldung:
**22.12.82 Patentblatt 82/51**

(45) Bekanntmachung des Hinweises auf die Patenterteilung:
**12.08.87 Patentblatt 87/33**

(84) Benannte Vertragsstaaten:
**AT BE CH DE FR GB IT LI NL SE**

(56) Entgegenhaltungen:
**DE-A-2 454 397**
**DE-A-2 753 595**
**DE-A-2 832 937**
**US-A-4 085 161**
**US-A-4 172 062**

(73) Patentinhaber: **BASF Lacke + Farben**
**Aktiengesellschaft, Max- Winkelmann- Strasse 80,**
**D-4400 Münster (DE)**

(72) Erfinder: **Diefenbach, Horst, Dr. Dipl.- Chem.,**
**Lerchenhain 8, D-4405 Nottuln (DE)**
Erfinder: **Dobbelstein, Arnold, Dr. Dipl.- Chem.,**
**Emil- Nolde- Weg 95, D-4400 Münster (DE)**
Erfinder: **Hille, Hans- Dieter, In der Schlage 24,**
**D-5060 Berg.- Gladbach (DE)**

(74) Vertreter: **Habbel, Hans- Georg, Dipl.- Ing.,**
**Postfach 3429 Am Kanonengraben 11, D-4400**
**Münster (DE)**

**Beschreibung**

Verfahren zur Herstellung von Bindemitteln für kathodisch abscheidbare Überzugsmassen

Die Erfindung betrifft ein Verfahren zur Herstellung von Bindemitteln für kathodisch abscheidbare Überzugsmassen für das Elektrotauchlackierverfahren auf Basis kationischer Kunstharze.

Die als Elektrotauchlackierverfahren bezeichnete elektrophoretische Abscheidung von Kunstharzen auf elektrisch leitenden Substraten ist bekannt und hat weite Verbreitung gefunden. Dabei bietet insbesondere das kataphoretische Verfahren, bei dem kationische Harze auf einem als Kathode geschalteten Substrat abgeschieden werden, Vorteile, die in der Literatur beschrieben sind und dem Fachmann gut bekannt sind. Die bei dem Verfahren als Bindemittel verwendeten Kunstharze können Ammonium-, Sulfonium- oder Phosphoniumgruppen enthalten.

Außerdem ist es bekannt, Copolymerisate aus Monomeren mit basischen Gruppen und weiteren Monomeren als Bindemittel für kationische Elektrotauchlacke zu verwenden.

Die genannten Kunstharze sind beispielsweise beschrieben in: DE-AS 2 075 799, DE-OS 2 634 211, DE-OS 2 603 666 DE-OS 2 531 960, DE-OS 2 265 195, DE-OS 2 252 536, DE-PS 1 546 840, DE-PS 1 546 854, DE-AS 2 320 301, DE-OS 2 554 080, DE-AS 1 930 949, DE-OS 2 707 482 und DE-OS 2 732 902.

Die kationischen Harze werden in der Regel mit Säuren ganz oder teilweise neutralisiert, um sie wasserlöslich oder wasserdispergierbar zu machen. Die Dispersionen können dann gegebenenfalls nach Pigmentierung und Zugabe von Füllstoffen, Verlaufhilfsmitteln, geringen Anteilen von organischen Lösungsmitteln und weiteren bekannten Hilfsstoffen unter Anlegen einer Spannung auf den als Kathode geschalteten Substraten abgeschieden werden. Nach dem Einbrennen des abgeschiedenen Films wird so ein vor Korrosion schützender Überzug erhalten.

Handelsübliche Emulsionspolymerisate können, obwohl leicht durch Emulsionspolymerisation herstellbar, in der Regel nicht als Bindemittel für Elektrotauchlacke verwendet werden.

In der DE-OS 24 54 397 wird ein Verfahren zur Herstellung kationischer wäßriger Copolymerisatdispersionen offenbart, bei dem ethylenisch ungesättigte Monomere in einer in wäßriger Phase durchgeführten Polymerisation auf ein Copolymerisat eines K-Wertes von 20 bis 60 aus (a) 70 bis 90 Gewichts-% Styrol und/oder einem (Meth)acrylsäureester eines 1 bis 8 C-Atome enthaltenen Alkanols, gegebenenfalls zusätzlich Acrylnitril und (b) 10 bis 30 Gewichts-% monoolefinisch ungesättigten Monomeren mit tertiären, protonierten tertiären oder quaternären Stickstoffatomen, aufgepfropft werden.

Die nach der DE-OS 24 54 397 erhaltenen Dispersionen weisen neben einer besonders hohen Scherstabilität auch eine geringe Neigung zum Verfärben auf und sind zum (Oberflächen-)Leimen von Papier sowie zum Beschichten von Leder, Papier und textilen Flächengebilden verwendbar.

Der DE-OS 24 54 397 sind keinerlei Hinweise auf eine Verwendung der dort offenbarten Dispersionen in kathodisch abscheidbaren Elektrotauchlacken zu entnehmen.

Aus der DE-OS 27 53 595 sind Bindemittel für kathodisch abscheidbare Elektrotauchlacke bekannt, die durch Aufpfropfen von Epoxidverbindungen auf Acrylharze mit sekundären und/oder tertiären Aminogruppen erhalten werden.

Die DE-OS 28 32 937 beschreibt kationische Bindemittel für wasserverdünnbare, wärmehärtende Überzugsmittel, die durch Aufpfropfen von ethylenisch ungesättigten Monomeren auf Reaktionsprodukte aus epoxidgruppenhaltigen ungesättigten Dienpolymerisaten und Aminen hergestellt werden.

In den US-Patentschriften 4,085,161 und 4,172,062 werden wasserverdünnbare Bindemittel für kathodisch abscheidbare Elektrotauchlacke durch Polymerisation von ethylenisch ungesättigten Monomeren in Gegenwart von ethylenische Doppelbindungen aufweisenden Epoxy-Aminaddukten synthetisiert.

Sowohl in den deutschen Offenlegungsschriften DE-OS 27 53 595 und DE-OS 28 32 937 als auch in den US-Patentschriften 4,085,161 und 4,172,062 werden die Bindemittel in organischer Phase bzw. in Masse, d.h. ohne Verwendung von Lösungsmitteln synthetisiert.

Mit diesen Verfahren sind die großen Nachteile verbunden, daß die Bindemittel nach der Herstellung erst noch in einem wäßrigen Medium stabil dispergiert werden müssen und daß in den Fällen, in denen die Polymerisationen in organischer Phase durchgeführt worden sind, auch noch große Mengen organischer Lösungsmittel entfernt werden müssen.

Der vorliegenden Erfindung liegt die Aufgabe zugrunde, ein Verfahren zur Herstellung von Bindemitteln für kathodisch abscheidbare Überzugsmassen bereitzustellen, das die oben dargelegten Nachteile des Standes der Technik nicht aufweist und das Bindemittel liefert, die Überzüge mit hoher Oberflächengüte und gutem Korrosionschutz ergeben.

Diese Aufgabe wird durch ein Verfahren der eingangs genannten Art erfindungsgemäß dadurch gelöst, daß

(A) 5 bis 95 Gewichts-% ethylenisch ungesättigte, polymerisierbare Monomere mit

(B) 95 bis 5 Gewichts-% eines kationischen Kunstharzes, ausgenommen ein Copolymerisat eines K-Wertes von 20 bis 60 aus

(a) 70 bis 90 Gewichts-% Styrol und/oder einem (Meth)acrylsäureester eines 1 bis 8 C-Atome enthaltenden Alkanols und gegebenenfalls zusätzlich Acrylnitril und

(b) 10 bis 30 Gewichts-% monoolefinisch ungesättigten Monomeren mit tertiären, protonierten tertiären oder quaternären Stickstoffatomen

gemischt werden, wobei die Summe der Komponenten (A), und (B) 100 % beträgt und in wäßriger Phase eine Polymerisation der Monomere durchgeführt wird.

Die Polymerisation wird vorteilhaft radikalisch durchgeführt und durch Radikalbildner initiiert. Als Radikalbildner können sowohl wasserlösliche Verbindungen, wie $H_2O_2$ und Kaliumpersulfat als auch in Wasser schwer lösliche Verbindungen, wie Azoisobuttersäurenitril oder organische Peroxide verwendet werden.

In einer bevorzugten Ausführungsform des Verfahrens wird die Mischung der Komponenten (A) und (B) gegebenenfalls unter Zusatz von Emulgatoren in Wasser emulgiert, und diese Emulsion wird unter Rühren in erhitztes Wasser eingeleitet, wobei gleichzeitig getrennt von der Emulsion der Radikalbildner in das Wasser eingeleitet wird.

Das Verfahren kann vorteilhaft auch derart durchgeführt werden, daß die Mischung der Komponenten (A) und (B) in erhitztes Wasser eingerührt wird und danach unter Rühren der Radikalbildner eingeleitet wird.

Die so durchgeführte Reaktion ist eine Emulsionspolymerisation, bei der das kationische Harz die Rolle eines sonst üblichen Emulgators übernimmt. Gegebenenfalls kann jedoch ein zusätzlicher Emulgator eingesetzt werden. Hierfür sind folgende Verbindungen geeignet:

1. Kationenseifen: Cetylaminhydrochlorid und Salze anderer Fettamine mit starken Säuren.

2. Nichtionogene Emulgatoren, die sich durch Reaktion von langkettigen Alkoholen oder alkylierten Phenolen mit Ethylenoxid herstellen lassen (Ethoxylierung).

Die Emulsionspolymerisation ist an sich dem Fachmann gut bekannt. Er wird daher je nach Art der eingesetzten Monomeren die geeigneten Verfahrensbedingungen wählen.

Als ethylenisch ungesättigte, polymerisierbare Monomere (Komponente A) kommen beispielsweise Verbindungen der folgenden Art in Frage: Derivate der Acrylsäure bzw. Methacrylsäure, wie Acryl- bzw. Methacrylsäureester, z. B. Methylacrylat, Butylacrylat, Methylmethacrylat, Butylmethacrylat, Acrylsäure- bzw. Methacrylsäureester mit funktionellen Gruppen, wie z. B. Hydroxylgruppen, beispielsweise Hydroxyethylacrylat, Hydroxypropylacrylat, Hydroxypropylmethacrylat, mit Epoxidgruppen wie z. B. Glycidylacrylat oder -methacrylat, mit tertiären Aminogruppen wie z. B. Dimethylaminoethylacrylat oder Dimethylaminopropylacrylat. Weiterhin kommen in Frage Acrylnitril, Methacrylamid, Methylolacrylamid bzw. -methacrylamid, bzw. deren verätherte Derivate. Geringe Mengen von Acrylsäure bzw. Methacrylsäure können ebenfalls zugegen sein. Weiterhin kommen in Frage Vinylaromaten, wie z. B. Styrol, Vinyltoluol, Vinylester, wie z. B. Vinylacetat, Vinylpropionat, Vinylester von α-Alkylcarbonsäuren, Ethylen, Propylen, Butadien, Vinylchlorid, Vinylidenchlorid, Vinylpyridin, Vinylcarbazol und andere.

Bevorzugte Monomere sind die Ester der Acrylsäure und/oder Methacrylsäure. Ganz besonders wird als Komponente (A) eine Mischung aus

a$_1$) 10 bis 99 Gew-% Estern der Acrylsäure und/oder Methacrylsäure

a$_2$) 1 bis 30 Gew-% ethylenisch ungesättigten Verbindungen mit funktionellen Gruppen und

a$_3$) 0 bis 80 Gew-% weiteren Monomeren bevorzugt.

Als kationische Kunstharze (Komponente B) kommen Harze mit Ammonium-, Sulfonium- oder Phosphoniumgruppen in Frage. Die Gruppen können prinzipiell an die verschiedensten Harzreste chemisch gebunden sein, wie z. B. Epoxidharze, Acrylatharze, Polyesterharze, Polyurethanharze, Polyätherharze oder Polyamidharze.

Das kationische Kunstharz kann beispielsweise durch folgende Reaktionen hergestellt worden sein:

a) Umsetzung von Harzen mit aktivierten Doppelbindungen mit sekundären oder Primären Aminen;

b) Umsetzung von Harzen mit OH- oder COOH-Gruppen mit tertiären aminogruppenhaltigen Isocyanaten;

c) Umsetzung von tertiären aminogruppenhaltigen Polyalkoholen oder Polyaminen mit Polyisocyanaten;

d) Umsetzung von tertiären aminogruppenhaltigen ethylenisch ungesättigten Verbindungen (Aminoacrylaten) mit weiteren copolymerisierbaren Monomeren;

e) Umsetzung von tertiären aminogruppenhaltigen Alkoholen oder Polyaminen mit Polycarbonsäuren oder deren kondensierbaren Derivaten;

f) Umsetzung von Polyphenolen mit Formaldehyd und Amin unter Herstellung von Mannich-Basen.

Als Komponente (B) besonders bevorzugte Kunstharze sind Harze, die durch Umsetzung eines epoxidgruppenhaltigen Harzes, insbesondere auf der Basis von Bisphenol A, mit Aminen, Ammoniumsalzen, Sulfid/Säuremischungen und/oder Phosphin/Säuremischungen erhalten worden sind.

Die Harze können neben den genannten Gruppen weitere reaktive Gruppierungen, wie z. B. Doppelbindungen, Hydroxylgruppen, Aminogruppen und blockierte Isocyanatgruppen enthalten. Diese Gruppierungen können teilweise beim Einbrennen unter Vernetzung reagieren. Dadurch erhält der Überzug besonders wertvolle Eigenschaften.

Den kationischen Harzen können bis zu 50 Gew-% weitere nicht wassermischbare Harze, wie z. B. Polyester, Epoxidharze oder Polyurethanharze zugemischt sein. Die zugemischten Harze und gegebenenfalls auch zugemischte niedermolekulare Komponenten können reaktive Gruppen enthalten, so daß sie beim Einbrennen als Vernetzungsmittel wirken.

Die genannten Harzsysteme und ihre Herstellung sind dem Fachmann bekannt. Sie sind nicht Gegenstand der Erfindung, und sie brauchen daher nicht näher beschrieben zu werden.

Es war überraschend, daß das erfindungsgemäße Verfahren stabile Dispersionen auf Basis von Emulsionspolymerisaten ergibt, die kathodisch abscheidbar sind und nach dem Einbrennen Überzüge mit den geforderten guten Eigenschaften hinsichtlich der Oberflächengüte und des Korrosionsschutzes liefern. Hierbei muß betont werden, daß die nach dem erfindungsgemäßen Verfahren erhaltenen Bindemittel wesentlich andere Eigenschaften aufweisen, als sie durch Mischen eines handelsüblichen Emulsionspolymerisats mit einem kationischen Harz erzielt werden. Diese Mischungen zeigen nämlich häufig Unvertraglichkeiten zwischen den Komponenten. Sie lassen sich daher nicht gleichmäßig abscheiden, oder die erhaltenen Überzüge weisen starke Störungen in ihrer Oberfläche, wie zum Beispiel Krater, auf.

Ein besonderer Vorteil, der nach dem erfindungsgemäßen Verfahren herstellten Bindemittel liegt darin, daß durch die Auswahl der Monomeren und des kationischen Harzes und die Wahl des Verhältnisses zwischen ihnen die Schichtdicke des abgeschiedenen Film variiert werden kann. Vorteilhaft betragen der Anteil der Komponente (A) 20 bis 90 Gewichts-% und der Anteil der Komponente (B) 80 bis 10 Gewichts-%, wobei die Summe der Komponenten (A) und (B) 100 % beträgt.

Im folgenden wird die Erfindung anhand von Beispielen näher erläutert. Teile (Tl.) sind Gewichtsteile (Gew.Tl.).

## Herstellung eines Polyurethanvernetzers

In einem Reaktor wurden 218 Gew. Tl. 2-Ethylhexanol langsam zu 291 Gew. Tl. einer 80/20-Isomerenmischung von 2,4-/2,6-Toluylendiisocyanat unter Rühren und in einer Stickstoffatmosphäre zugegeben, wobei die Reaktionstemperatur durch äußere Kühlung unter 38°C gehalten wurde. Der Ansatz wurde noch 1/2 Std. bei 38°C gehalten und dann auf 60°C erwärmt, wonach 75 Gew.Tl. Trimethylolpropan und anschließend 0,08 Tl. Dibutylzinndilaurat als Katalysator zugegeben wurden. Nach einer exothermen Reaktion zu Beginn wurde der Ansatz 1,5 Std. bei 121°C gehalten, bis im wesentlichen die gesamten Isocyanatgruppen verbraucht waren, was an dem Infrarotspektrum zu erkennen war. Der Ansatz wurde dann mit 249 Tl. Ethylenglykolmonobutylether verdünnt.

## Herstellung eines kationischen Harzes

In einen geeigneten Reaktor wurden 970 Gew.Tl. eines handelsüblichen Polyglycidethers auf Basis Bisphenol A mit einem Epoxyäquivalentgewicht von 485 und 265 Gew. Tl. eines handelsüblichen Polycaprolactondiols (PCP 0200® von Union Carbide Corporation) gegeben. Dieser Ansatz wurde auf 100°C unter Stickstoff erwärmt und es wurden 0,40 Gew.Tl. Benzyldimethylamin zugegeben. Die Reaktionsmischung wurde weiter auf 130°C erwärmt und wurde für etwa 1,5 Std. bei dieser Temperatur gehalten. Der Ansatz wurde dann auf 110°C abgekühlt und es wurden 110 Gew.Tl. Methylisobutylketon in das Reaktionsgefäß eingebracht. Dann wurden 39,8 Gew.Tl. einer 73 %igen Lösung des Methylisobutyldiketimins von Diethylentriamin in Methylisobutylketon und anschließend 100 Gew.Tl. Methylisobutylketon zugegeben. Es wurde gekühlt, bis der Ansatz eine Temperatur von 70°C erreicht hatte; dann wurden 53,1 Gew.Tl. Diethylamin zugegeben und der Ansatz wurde erneut auf 120°C erwärmt und 3 Std. bei dieser Temperatur gehalten.

Zu 576 Tl. des vorstehenden durch das Polycaprolactondiol kettenverlängerten Polyethers wurden 310 Gew.Tl. des Polyurethanvernetzers und 13,2 Tl. Dibutylzinndilaurat-Katalysator gemischt. Anschließend wurde mit 12,3 Tl. Essigsäure neutralisiert und langsam mit 1033 Gew.Tl. entionisiertem Wasser verdünnt.

## Herstellung eines erfindungsgemäßen Bindemittels

In einem 3 l-Glasreaktionsgefäß, das mit Rührer, Thermometer, Rückflußküler und einem 2 l fassenden Zulaufgefäß ausgerüstet ist, werden 1248 g deionisiertes Wasser vorgelegt.

In dem 2-l-Zulaufgefäß werden unter Rühren folgende Komponenten nacheinander eingewogen:

1. 833 g kationisches Harz, wie vorstehend beschrieben
2. 450 g Styrol
3. 450 g Butylacrylat
4. 19 g Azoisobuttersäuredinitril (Porofor N)

Nachdem das Wasser auf 80°C gebracht wurde, wird die in dem Zulaufgefäß bereitete Präemulsion, die ständig gerührt wird, innerhalb 2 Std. gleichmäßig in das Reaktionsgefäß zudosiert, wobei die Temperatur auf 80°C gehalten wird. Es wird noch weitere 2 Std. bei 80° C gehalten. Man erhält eine stabile Dispersion mit einem Festkörper von 40 %.

Zur Herstellung eines an der Kathode abscheidbaren Lackes wurden 1000 g des erfindungsgemäßen Bindemittels mit 40 g Monoethylenglykolethylhexylether und 960 g entsalztem Wasser gemischt. Der erhaltene Lack hatte einen pH-Wert von 5,95.

Ein als Kathode geschaltetes entfettetes Stahlblech wurde bei 200 V innerhalb von 2 Minuten beschichtet und anschließend 20 Minuten bei 190° C eingebrannt. Man erhielt einen glatten gleichmäßigen Film von 50 μm Dicke. Beim Anritzen und Einwirkung eines Salzdampfes bei 38° C gemäß ASTM D-117-73 zeigte das Blech ein Unterrosten der Anritzung von nur 0,6 mm nach 14 Tagen.

**Herstellung einer Pigmentdispersion**

Es wurde eine kationische Pigmentdispersion hergestellt, indem man zuerst 138 TI. Alkylimidazolin (Geigy Amin C®), 31 TI. Essigsäure, 138 TI. Ethylenglykolmonobutylether und 383 TI. entionisiertes Wasser mischte. 100 TI. dieses Dispergiermittels wurden mit 40 TI. eines handelsüblichen Acetylenalkohols (Surfynol 104 A® von Air Products and Chemicals Inc.), 260 TI. entionisiertem Wasser, 134 TI. Anthrazitkohle (325 Maschen, US-Standard), 40 TI. Bleisilikat, 20 TI. Strontiumchromat und 6 TI. eines handelsüblichen Tons (Benagel EW® von National Clay) gemischt. Die erhaltene Aufschwemmung wurde auf eine Feinheit No. 7 nach Hegmann in einer geeigneten Mühle zerkleinert.

Zur Herstellung eines pigmentierten Lackes wurden 750 TI. des erfindungsgemäßen Bindemittels, 300 TI. der Pigmentdispersion und 945 TI. deionisiertes Wasser gemischt. Der PH-Wert betrug 5,8.

Bei der kathodischen Abscheidung auf mit Zn-Phosphat behandelten Stahlblechen bei 200 V für 2 min. und nach anschließender Härtung bei 190° C für 20 min. wurden glatte, harte und flexible Filme mit einer Dicke von 23 μm erhalten.

**Patentansprüche**

1. Verfahren zur Herstellung von Bindemitteln für kathodisch abscheidbare Überzugsmassen für das Elektrotauchlackierverfahren auf Basis kationischer kunstharze, dadurch gekennzeichnet, daß

(A) 5 bis 95 Gewichts-% ethylenisch ungesättigte, polymerisierbare Monomere mit

(B) 95 bis 5 Gewichts-% eines kationischen Kunstharzes, ausgenommen ein Copolymerisat eines K-Wertes von 20 bis 60 aus

(a) 70 bis 90 Gewichts-% Styrol und/oder einem (Meth) acrylsäureester eines 1 bis 8 C-Atome enthaltenden Alkanols und gegebenenfalls zusätzlich Acrylnitril und

(b) 10 bis 30 Gewichts-% monoolefinisch ungesättigten Monomeren mit tertiären, protonierten tertiären oder quaternären Stickstoffatomen

gemischt werden, wobei die Summe der Komponenten (A) und (B) 100 % beträgt und in wäßriger Phase eine Polymerisation der Monomeren durchgeführt wird.

2. Verfahren nach Anspruch 1, dadurch gekennzeichnet, daß die Polymerisation durch Radikalbildner initiiert wird.

3. Verfahren nach Anspruch 2, dadurch gekennzeichnet, daß die Mischung der Komponenten (A) und (B) gegebenenfalls unter Zusatz von Emulgatoren in Wasser emulgiert wird und diese Emulsion unter Rühren in erhitztes Wasser eingeleitet wird, wobei gleichzeitig getrennt von der Emulsion der Radikalbildner in das Wasser eingeleitet wird.

4. Verfahren nach Anspruch 2, dadurch gekennzeichnet, daß die Mischung der Komponenten (A) und (B) in erhitztes Wasser eingerührt wird und danach unter Rühren der Initiator eingeleitet wird.

5. Verfahren nach Anspruch 1 bis 4, dadurch gekennzeichnet, daß der Anteil der Komponente (A) 20 bis 90 Gewichts-% und der Anteil der Komponente (B) 80 bis 10 Gewichts-% beträgt.

6. Verfahren nach Anspruch 1 oder 5, dadurch gekennzeichnet, daß als Komponente (A) Ester der Acrylsäure und/oder Methacrylsäure verwendet werden.

7. Verfahren nach Anspruch 6, dadurch gekennzeichnet, daß als Komponente (A) eine Mischung aus

$a_1$) 10 bis 99 Gewichts-% Estern der Acrylsäure und/ oder Methacrylsäure,

$a)_2$ 1 bis 30 Gewichts-% ethylenisch ungesättigten Verbindungen mit funktionellen Gruppen und

$a_3$) 0 bis 80 Gewichts-% weiteren Monomeren verwendet wird, wobei die Summe der Bestandteile $a_1$, $a_2$ und $a_3$ 100 % beträgt.

8. Verfahren nach Anspruch 1 bis 7, dadurch gekennzeichnet, daß das kationische Kunstharz durch Umsetzung eines epoxidgruppenhaltigen Harzes mit Aminen, Ammoniumsalzen, Sulfid/Säure-Mischungen und/oder Phosphin/Säure-Mischungen erhalten worden ist.

9. Verfahren nach Anspruch 8, dadurch gekennzeichnet, daß als epoxidgruppenhaltiges Harz ein Harz auf der Basis Bisphenol A verwendet worden ist.

**Claims**

1. Process for the preparation of binders for cathodic coating materials for the electrocoating process, based on cationic synthetic resins, characterized in that

(A) 5 to 95 % by weight of ethylenically unsaturated, polymerizable monomers are mixed with

(B) 95 to 5 % by weight of a cationic synthetic resin, with the exception of a copolymer having a K value of 20 to 60 and consisting of

(a) 70 to 90 % by weight of styrene and/or a (meth)acrylate of an alkanol of 1 to 8 C atoms and in addition, if appropriate, acrylonitrile, and

(b) 10 to 30 % by weight of monoolefinically unsaturated monomers having tertiary, protonated tertiary or quaternary nitrogen atoms,

the sum of components (A) and (B) being 100 %, and polymerization of the monomers is carried out in the aqueous phase.

2. Process according to Claim 1, characterized in that the polymerization is initiated by free-radical formers.

3. Process according to Claim 2, characterized in that the mixture of components (A) and (B) is emulsified in water, if necessary with the addition of emulsifiers, and this emulsion is introduced into heated water, while stirring, the free-radical former being introduced into the water at the same time, separately from the emulsion.

4. Process according to Claim 2, characterized in that the mixture of components (A) and (B) is stirred into heated water, and the initiator is then introduced while stirring.

5. Process according to Claims 1 to 4, characterized in that the amount of component (A) is 20 to 90 % by weight and the amount of component (B) is 80 to 10 % by weight.

6. Process according to Claim 1 or 5, characterized in that esters of acrylic acid and/or methacrylic acid are used as component (A).

7. Process according to Claim 6, characterized in that a mixture of

$a_1$ 10 to 99 % by weight of esters of acrylic acid and/or methacrylic acid,

$a_2$) 1 to 30 % by weight of ethylenically unsaturated compounds possessing functional groups and

$a_3$) 0 to 80 % by weight of further monomers, the sum of components $a_1$, $a_2$ and $a_3$ being 100 %, is used as component (A).

8. Process according to Claims 1 to 7, characterized in that the cationic synthetic resin has been obtained by reacting a resin containing epoxide groups with amines, ammonium salts, sulphide/acid mixtures and/or phosphine/ acid mixtures.

9. Process according to Claim 8, characterized in that a resin based on bisphenol a has been used as the resin containing epoxide groups.


**Revendications**

1.- Procédé de préparation de liants pour masses de revêtement pouvant être déposées cathodiquement pour le procédé de peinturage par électrophorèse, à base de résines synthétiques cationiques, caractérisé par le fait

(A) que l'on mélange 5 à 95 % en poids de monomères insaturés éthyléniquement polymérisables à

(B) 95 à 5 % en poids d'une résine synthétique cationique, excepté un produit de copolymérisation d'une valeur K de 20 à 60 formée de

(a) 70 à 90 % en poids de styrène et/ou d'un ester d'acide (méth)-acrylique d'un alcanol contenant 1 à 8 atomes de carbone et éventuellement en outre d'acrylonitrile et

(b) 10 à 30 % en poids de monomères insaturés monooléfiniquement contenant des atomes d'azote tertiaires, tertiaires protonisés ou quaternaires,

le total des constituants (A) et (B) étant de 100 % et qu'en phase aqueuse, on effectue une polymérisation des monomères.

2. Procédé selon la revendication 1, caractérisé par le fait que l'on amorce la polymérisation par des formateurs de radicaux.

3. Procédé selon la revendication 2, caractérisé par le fait que l'on émulsifie dans de l'eau le mélange des constituants (A) et (B), éventuellement avec addition d'émulsifiants et que l'on introduit cette émulsion sous agitation dans de l'eau chauffée, en introduisant simultanément dans l'eau le formateur de radicaux, séparément de l'émulsion.

4. Procédé selon la revendication 2, caractérisé par le fait que l'on délaye dans de l'eau chauffée le mélange des constituants (A) et (B) et qu'ensuite, sous agitation, on introduit l'amorceur.

5. Procédé selon l'une des revendications 1 à 4, caractérisé parle fait que la proportion du constituant (A) est de 20 à 90 % en poids et la proportion du constituant (B), de 80 à 10 % en poids.

6. Procede, selon l'une des revendications 1 et 5, caractérisé par le fait que comme constituant (A), on utilise des esters de l'acide acrylique et/ou de l'acide méthacrylique.

7. Procédé selon la revendication 6, caractérisé par le fait que comme constituant (A), on utilise un mélange de

$a_1$) 10 à 99 % en poids d'esters de l'acide acrylique et/ou de l'acide méthacrylique,

$a_2$) 1 à 30 % en poids de composés insaturés éthyléniquement à groupes fonctionnels, et

$a_3$) 0 à 80 % en poids d'autres monomères, le total des constituants $a_1$, $a_2$ et $a_3$ étant de 100 %.

8. Procédé selon l'une des revendications 1 à 7, caractérisé par le fait que la résine synthétique cationique a été obtenue par réaction d'une résine contenant des groupes époxyde sur des amines, sels d'ammonium, mélanges sulfure/acide et/ou mélanges phosphine/acide.

9. Procédé selon la revendication 8, caractérisé par le fait que comme résine contenant des groupes époxyde, on a utilisé une résine à base de bisphénol A.